# EUROPÄISCHE PATENTSCHRIFT

(11) **EP 0 803 312 B1**
(45) Veröffentlichungstag und Bekanntmachung des Hinweises auf die Patenterteilung: **31.07.2002**
(21) Anmeldenummer: 97104990.3
(22) Anmeldetag: 25.03.1997
(51) Int. Cl.: B23K 11/06, B23K 37/053

(54) **Verfahren und Vorrichtung zum Rollnaht-schweissen**
Method and device for roller seam welding
Procédé et appareil pour le soudage à la molette

(30) Priorität: 22.04.1996 CH 101396
(43) Veröffentlichungstag der Anmeldung: 29.10.1997
(73) Patentinhaber: ELPATRONIC AG, 8962 Bergdietikon (CH)
(72) Erfinder: Bonsen, Jochen, 8964 Rudolfstetten (CH)

(56) Entgegenhaltungen:
- EP-A- 0 023 753
- EP-A- 0 289 745
- GB-A- 1 201 202
- US-A- 3 615 968
- US-A- 4 525 617

## Beschreibung

Die Erfindung betrifft ein Verfahren gemäss Oberbegriff des Anspruchs 1. Die Erfindung betrifft weiter eine Vorrichtung zum Schweissen gemäss Oberbegriff des Anspruchs 7.

Es ist bekannt, aus ebenen Blechen hohlzylindrische Körper zu formen, z.B. Behälterzargen oder Lüftungsrohre, wobei die Ränder stumpf aneinanderliegen oder ein überlappender Blechbereich gebildet wird, der dann durch Rollnahtschweissen verbunden wird. Beim Rollnahtschweissen werden bekannterweise die zu schweissenden Körper vor dem Schweissbereich durch eine Vielzahl von dem zu schweissenden Körper angepassten Rollen geführt, welche eine den Körper umgebende Passage bzw. ein Führungswerkzeug bilden (sogenannte Diabolo-Rollen gemäss CH-A-671 904). Durch diese Rollenführungswerkzeuge wird der Körper in seiner Form gehalten und mit seinen Längskanten in eine Z-Schiene gedrückt, welche die für die Schweissung notwendige Stumpflage oder Ueberlappung der Längskanten bewirkt. Die Rollnahtschweissung erfolgt dann durch Vorschub des Bleches durch die Führungswerkzeuge mit auf die Ueberlappung einwirkenden Schweissrollen und in der Regel unter Verwendung von Drahtelektroden. Bei solchen Blechen, die Ausnehmungen aufweisen oder aus unterschiedlich dicken Materialien bestehen oder so zugeschnitten sind, dass die Stirnfläche des gerundeten Körpers nicht rechtwinklig zur Längsachse bzw. zur Schweissnahtrichtung steht, ergeben sich indes mit diesen bekannten Rollenführungswerkzeugen Probleme, da eine eindeutige Führung und Zentrierung des Werkstückes nicht mehr gewährleistet ist. Solche Schweissungen werden deshalb bis heute durch die herkömmlichen Schweissmaschinen nicht ausgeführt.

Dokument GB-A-1 201 202, das den nächstliegenden Stand der Technik darstellt, zeigt eine Schweissvorrichtung, bei welcher das gerundete Blech in einem flexiblen Band gehalten geschweisst wird. US-A-3 615 968 zeigt das Verbinden von Blechkanten, wobei das gerundete Blech in einem Formteil angeordnet ist. In beiden Fällen ist die Position des Bleches in Längsrichtung nicht genau definiert.

Der Erfindung liegt daher die Aufgabe zugrunde, ein Verfahren zum Schweissen von Blechen, insbesondere Blechmänteln zu schaffen, durch welches das Schweissen jeder beliebigen Blechzuschnittsform und auch von Blechen mit Ausnehmungen oder Materialdicken- oder Härteunterschieden möglich ist und welches den genannten Nachteil nicht aufweist.

Diese Aufgabe wird bei dem eingangs genannten Verfahren durch die kennzeichnenden Merkmale des Anspruchs 1 gelöst.

Dadurch, dass das Blech in einem Formteil und mit den Anschlägen in Längsrichtung definiert gehalten wird und mit dem Formteil zusammen der Schweissstelle zugeführt wird, können auch Bleche mit den genannten Zuschnitten, Ausnehmungen usw. ohne Probleme verschweisst werden.

Bei einer Vorrichtung wird die Aufgabe mit den Merkmalen des Anspruchs 7 gelöst.

Im folgenden werden Ausführungsbeispiele der Erfindung anhand der Zeichnungen näher erläutert. Dabei zeigt
Figur 1 eine Frontalansicht eines Formteiles zur Durchführung des Verfahrens, und
Figur 2 eine Seitenansicht des Formteiles von Figur 1.

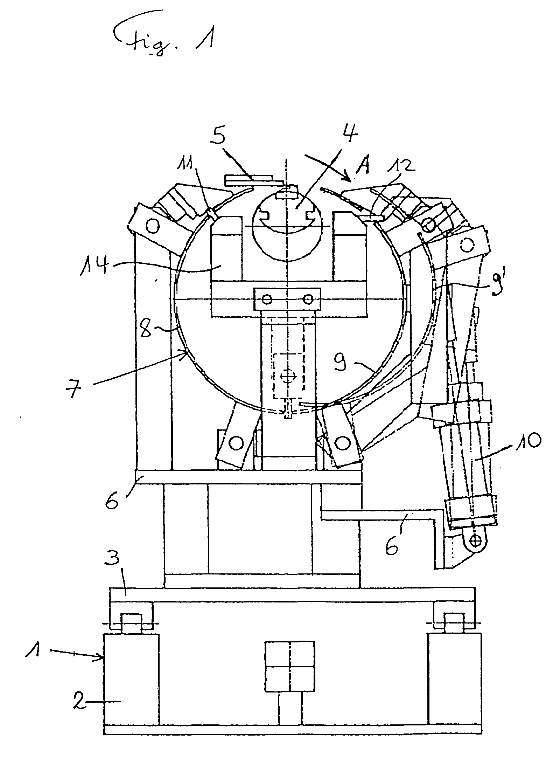

Figur 1 zeigt eine Ansicht einer Schweissmaschine in Längsrichtung gesehen, d.h. in Richtung der zu verschweissenden Naht. Die Schweissmaschine 1 weist ein Maschinengestell 2 auf, auf welchem ein beweglicher Schlitten 3 angeordnet ist. In der Zeichnung ist weiter der Unterarm 4 der Schweissmaschine ersichtlich und die Z-Schiene 5. Bei der gewählten Ansicht sind die Schweissrollen vorne oberhalb der Zeichnungsebene auf bekannte Weise angeordnet, so dass eine mit ihrer Ueberlappung in der Z-Schiene befindliche Zarge von der inneren und der äusseren Schweissrolle geschweisst werden kann. Ein entsprechender Aufbau der Rollnahtschweissmaschine ist bekannt und wird hier nicht näher dargestellt. Auf dem Maschinengestell 2 ist verfahrbar der genannte Schlitten 3 angeordnet, welcher auf einem Podest 6 das Formteil 7 trägt. Auf diese Weise kann das Formteil rasch und einfach gegen ein anderes Formteil für eine andere Werkstückform ausgewechselt werden. Das Formteil 7 besteht im gezeigten Beispiel aus zwei Hälften 8 und 9. Das Formteil ist mit seiner Innenform ungefähr dem herzustellenden Körper angepasst. Das Formteil 7 weist dabei einen feststehenden Teil 8 auf sowie einen zur Oeffnung des Formteiles teilweise wegschwenkbaren Abschnitt 9, welcher in der Figur in der geschlossenen Stellung mit 9 bezeichnet ist und in der geöffneten Stellung mit 9'. Das Oeffnen und Schliessen des Formteiles 7, bzw. das Auf- und Zuschwenken des Abschnitte 9 kann wie gezeigt mit einem Hydraulikzylinder 10 bewirkt werden, welcher mit seinem einen Ende am Podest 6 befestigt ist und mit seinem anderen Ende an dem Teil 9.

Gemäss der Erfindung wird zur Schweissung eines Körpers wie folgt vorgegangen: In das geöffnete Formteil wird ein Blech direkt aus dem Rundapparat eingebracht, der sich oberhalb des Formteils 7 befindet. Das von den Formwalzen des Rundapparats gerollte Blech wird, wie mit dem Pfeil A angedeutet, von oben her schräg in das geöffnete Formteil eingebracht. Das Blech legt sich dabei an die Innenwandung des Formteils 7 an. Beim Schliessen des Formteils mittels des Zylinders 10 nimmt das gerundete Blech die gewünschte Lage an, welche der Innenform des Formteils 7 entspricht und die Längskanten des Bleches gelangen auf bekannte Weise in die Nuten der Z-Schiene 5. Anstelle des Einführens des Bleches direkt aus dem Rundapparat von schräg oben her in das Formteil 7 kann auch ein manuelles Einführen eines vorgängig gerundeten Bleches in das Formteil erfolgen. In diesem Fall erfolgt das Einführen von vorne her, d.h. in Blickrichtung auf die Zeichnung. Wie gesagt ist bei geschlossenem Formteil der Körper mit seinen Längskanten in der Z-Schiene angeordnet und wird über seinen Umfang vom Formteil gehalten. Es sind nun im vorderen Bereich des Formteils Anschläge 11 und 12 vorgesehen, welche nach dem Einbringen des Bleches in das Formteil eingefahren werden können. Während des Einbringens des Bleches sind die Anschläge aus dem Formteil herausgezogen, um das Einbringen des Bleches nicht zu stören, insbesonders dann, wenn das Blech unregelmässig geformt ist. Die Lage der Anschläge 11 und 12 kann dabei in Längsrichtung justiert werden, um die Anschläge an die jeweilige Zuschnittsform des Bleches anzupassen. Wie gesagt werden nach dem Schliessen des Formteils die Anschläge in das Formteil eingefahren und ein weiterer verfahrbarer Anschlag 14 fährt von hinten gegen das eingebrachte Blech und schiebt es gegen die vorderen Anschläge 11 und 12. So wird das geformte Blech in der Längsrichtung des Formteiles 7 zentriert und gehalten, unabhängig davon, ob es unregelmässige Aussenabmessungen aufweist und ob innere Bereiche ausgeschnitten sind. Das zu schweissende Werkstück ist nun also im Formteil 8 angeordnet und dort fixiert. Nun wird das ganze Formteil 7 mittels des Schlittens 3 vorwärtsbewegt, so dass die überlappenden Längskanten des zu schweissenden Werkstückes zwischen die Schweissrollen gelangen. Die weitere Bewegung des Werkstückes mit dem Formteil 7 kann durch die Schweissrollen erfolgen, d.h. der Schlitten 3 wäre dann frei beweglich und wird nur durch die von den Schweissrollen ausgeübte Vortriebskraft nach vorne bewegt. Bevorzugterweise wird aber das Formteil mit dem Schlitten während des Schweissvorganges mit der eingestellten Schweissgeschwindigkeit angetrieben. Dieser Antrieb des Schlittens und damit des Formteiles bzw. des Werkstückes entlastet die Schweissrollen und verbessert die Nahtqualität der Schweissnaht, da ein Schlupf zwischen Schweissrollen und Werkstück ausgeschlossen ist. Am Ende des Schweissvorganges werden die Anschläge 11 und 12 wieder aus dem Formteil ausgefahren und der Anschlag 14 wird nach hinten zurückgefahren und das Formteil wird geöffnet, damit das geschweisste Werkstück entnommen werden kann. Danach fährt das Formteil in seine hintere Endlage zurück und ist zur Beschickung mit einem neuen gerundeten Blech bereit. Es können aber auch mehrere Schlitten mit Formteilen vorhanden sein, welche nacheinander zum Einsatz kommen und wobei ein geleertes Formteil auf einem separaten Rückwärtspfad wieder nach hinten zur erneuten Beschickung gefahren wird. Auch kann ein genügend lang ausgebildeter Schlitten mit mehreren Formteilen zugleich beladen sein.

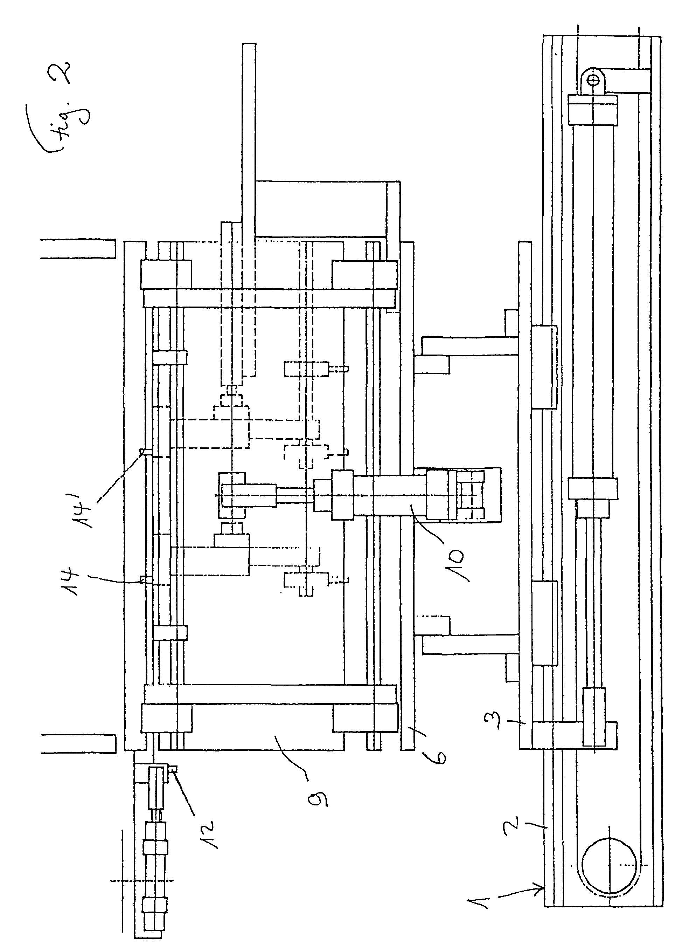

Figur 2 zeigt eine Seitenansicht der Einrichtung von Figur 1, wobei gleiche Bezugsziffern gleiche Teile bezeichnen. Der hintere Anschlag ist dabei in zwei Stellungen 14 bzw. 14' gezeigt. Das Formteil ermöglicht das Spannen, Zentrieren und Schweissen von zylindrischen oder anders geformten Zargen, wobei bei anders geformten Zargen das Formteil mit seiner Innenform an die gewünschte Werkstückform derart angepasst sein muss, dass die zu verschweissenden Ränder in die definitive Schweissposition gelangen und dort fixiert bleiben. Jedenfalls ermöglicht das Formteil im Gegensatz zu den herkömmlichen Kalibrierrollen das Runden und Schweissen jeder beliebigen Zuschnittsform. Auch solche Formen, welche Aussparungen aufweisen oder Materialdicken und Härteunterschiede aufweisen und deshalb unregelmässig gerundet werden und mit den bekannten Rollenführungswerkzeugen nicht geführt und zentriert werden können, sind in dem Formteil ohne weiteres beherrschbar und in genau definierter Lage den Schweissrollen zuführbar. Bevorzugterweise wird wie gesagt ein Teil des Formteils zur Beschickung geöffnet, wodurch das Einrunden resp. das Beschicken von Hand erleichtert wird. Beim Schliessen bzw. Spannen des Formteils werden Rundungsunterschiede der Zargen bedingt durch die Zuschnittsform oder durch Aussparungen in denselben wieder ausgeglichen und das Werkstück legt sich an die Innenwandung des Formteiles an. Die genannten vorzugsweise oben in dem Formteil angeordneten und pneumatisch betätigbaren Anschläge verhindern einen Versatz des Werkstückes im Formteil und erlauben eine genaue Längszentrierung. Durch den hinteren Anschlag 14, welcher vorzugsweise einen sehr langen Hub aufweist, ergibt sich eine einfache Anpassung des Formteiles an verschiedene Zargenhöhen. Das Formteil weist weiter den Vorteil auf, dass die bei den herkömmlichen Führungswerkzeugen erforderlichen einschränkenden Zuschnittstoleranzen wesentlich erhöht werden können, da das Formteil auf solche Toleranzen nicht empfindlich ist, im Gegensatz zu den bekannten Rollenführungswerkzeugen. Es ist daher auch möglich, ohne eine zeitraubende Werkzeugumrichtung auch Werkstücke mit kleinen Durchmesserdifferenzen zu schweissen, wie das z.B. bei ineinandersteckbaren Röhrenteilen der Fall ist, bei denen das eine Teil einen entsprechend geringeren Durchmesser aufweisen muss, damit es in das andere Teil einführbar ist. Wie gesagt wird dazu im Gegensatz zu den Rollenführungswerkzeugen nur ein Formteil benötigt, welches für Zargen von geringfügig verschiedenem Durchmesser einsetzbar ist.

## Patentansprüche

1. Verfahren zum Schweissen, bei welchem mindestens ein beidseits stirnseitig offener Körper aus mindestens einem ebenen Blech mit dessen Rändern stumpf aneinander anliegend oder überlappend geformt und mit diesem Nahtbereich einer Schweissstelle zugeführt wird, wobei das mindestens eine Blech in einen Formteil (7,8,9) eingebracht, in diesem gehalten und zusammen mit diesem der Schweissstelle zugeführt wird, **dadurch gekennzeichnet, dass** nach dem Einbringen des Bleches mindestens zwei vordere Anschläge (11, 12) in das Formteil eingefahren werden und dass mindestens ein weiterer, verfahrbarer Anschlag (14) das Blech zwischen sich und den vorderen Anschlägen festspannt.

2. Verfahren nach Anspruch 1, **dadurch gekennzeichnet, dass** das Blech direkt aus einem Rundapparat in das Formteil (7,8,9) eingeführt wird.

3. Verfahren nach Anspruch 1 oder 2, **dadurch gekennzeichnet, dass** das Formteil (7,8,9) zum Einführen des gerundeten Bleches geöffnet wird und nachfolgend geschlossen wird.

4. Verfahren nach einem der Ansprüche 1 bis 3, **dadurch gekennzeichnet, dass** nach dem Einbringen des Bleches das Formteil (7,8,9) motorisch in Richtung der Schweissstelle verfahren wird, bis der Körper in die Schweissposition gelangt.

5. Verfahren nach Anspruch 4, **dadurch gekennzeichnet, dass** das Formteil (7,8,9) während des Schweissens motorisch mit der gewählten Schweissvorschubgeschwindigkeit angetrieben wird.

6. Verfahren nach einem der Ansprüche 1 bis 5, **dadurch gekennzeichnet, dass** der Körper überlappend geformt und mit Schweissrollen und Drahtelektroden rollnahtgeschweisst wird.

7. Vorrichtung zum Schweissen einer Stumpfnaht oder einer Ueberlappungsnaht, umfassend Schweissrollen und Drahtelektroden und mindestens einen Formteil (7,8,9) zur Einbringung mindestens eines vorgeformten zu schweissenden Körpers sowie Antriebsmittel zum Antrieb des Formteils in Schweissrichtung, **gekennzeichnet durch** Spannmittel (11, 12, 14) zum Festhalten des Körpers in Längsrichtung des Formteils, wobei die Spannmittel mindestens zwei vordere Anschläge (11,12), welche in das Formteil hineinschwenkbar und aus diesem hinausschwenkbar sind, und mindestens einen hinteren Anschlag (14) umfassen, welcher in Längsrichtung des Formteiles verstellbar ist.

8. Vorrichtung nach Anspruch 7, **dadurch gekennzeichnet, dass** der Formteil (7) aus zwei Schalen (8, 9) gebildet ist, wobei die eine Schale (9) zum Oeffnen und Schliessen des Formteiles schwenkbar angeordnet ist.

9. Vorrichtung nach einem der Ansprüche 8 bis 10, **dadurch gekennzeichnet, dass** das Antriebsmittel mit einer Vorschubgeschwindigkeit antreibbar ist, welche auf die Schweissvorschubgeschwindigkeit der Vorrichtung abgestimmt ist.

10. Vorrichtung nach einem der Ansprüche 7 oder 8, **dadurch gekennzeichnet, dass** das mindestens eine Formteil (7,8,9) auf einem Podest (6) angeordnet ist, welches auf einem verfahrbaren Schlitten (3) angeordnet ist.

11. Vorrichtung nach Anspruch 10, **dadurch gekennzeichnet, dass** mehrere Schlitten mit jeweils mindestens einem Formteil vorgesehen sind.

## Claims

1. Method for welding wherein at least one body open at both ends is formed from at least one flat metal sheet with its edges butted together or overlapping and is fed with this seam region to a welding point, and wherein the at least one sheet is introduced into a forming part (7, 8, 9), held therein, and fed to the welding point together therewith, **characterized in that** after the introduction of the sheet at least two forward stops (11, 12) are run into the forming part and **in that** at least one additional traversable stop (14) clamps the sheet between itself and the forward stops.

2. Method according to Claim 7, **characterized in that** the sheet is inserted directly from a rounding apparatus into the forming part (7, 8, 9).

3. Method according to Claim 1 or Claim 2, **characterized in that** the forming part (7, 8, 9) is opened for the insertion of the rounded sheet and is then closed.

4. Method according to any one of Claims 1 to 3, **characterized in that** after the introduction of the sheet the forming part (7, 8 9) is motor-driven towards the welding point until the body arrives in the welding position.

5. Method according to Claim 4, **characterized in that** during welding the forming part (7, 8, 9) is motor-driven at the selected rate of feed.

6. Method according to any one of Claims 1 to 5, **characterized in that** the body is formed with an overlap and is roller seam welded with welding rollers and wire electrodes.

7. Apparatus for welding a butting or overlapping seam, comprising welding rollers and wire electrodes and at least one forming part (7, 8, 9) for the introduction of at least one preformed body for welding, and also drive means for driving the forming part in the welding direction, **characterized by** clamping means (11, 12, 14) for holding the body fast in the longitudinal direction of the forming part, the clamping means comprising at least two forward stops (11, 12) which can be swung into and out of the forming part and at least one rear stop (14) which is displaceable in the longitudinal direction of the forming part.

8. Apparatus according to Claim 7, **characterized in that** the forming part (7) is formed from two shells (8, 9), one shell (9) being pivotably arranged for the opening and closing of the forming part.

9. Apparatus according to any one of Claims 8 to 10 [*sic*], **characterized in that** the drive means is drivable at a rate of advance which matches the welding rate of feed of the apparatus.

10. Apparatus according to Claim 7 or Claim 8, **characterized in that** the at least one forming part (7, 8, 9) is arranged on a platform (6) which is arranged on a traversable carriage (3).

11. Apparatus according to Claim 10, **characterized in that** a plurality of carriages, each with at least one forming part, are provided.

## Revendications

1. Procédé de soudage, dans lequel au moins un corps ouvert frontalement des deux côtés, réalisé en au moins une tôle plane, est formé par la mise en appui ou en chevauchement l'un sur l'autre, bout à bout, de ses bords et est amené, avec cette zone de joint, à un poste de soudage, la au moins une tôle étant introduite dans une pièce de forme (7, 8, 9), maintenue dans celle-ci et amenée, conjointement avec celle-ci, au poste de soudage, **caractérisé en ce que**, après introduction de la tôle, au moins deux butées avant (11, 12) sont introduites dans la pièce de forme, et **en ce qu'**au moins une autre butée (14) déplaçable bloque par serrage la tôle, entre elle et les butées avant.

2. Procédé selon la revendication 1, **caractérisé en ce que** la tôle est introduite directement depuis un appareil de roulage dans la pièce de forme (7, 8, 9).

3. Procédé selon la revendication 1 ou 2, **caractérisé en ce que** la pièce de forme (7, 8, 9) est ouverte pour introduire la tôle roulée et est ensuite fermée.

4. Procédé selon l'une des revendications 1 à 3, **caractérisé en ce que**, après l'introduction de la tôle, la pièce de forme (7, 8, 9) est mue de façon motorisée dans la direction du poste de soudure, jusqu'à ce que le corps arrive à la position de soudure.

5. Procédé selon la revendication 4, **caractérisé en ce que** la pièce de forme (7, 8, 9) est entraînée par moteur, pendant le soudage, à la vitesse d'avance de soudage sélectionnée.

6. Procédé selon l'une des revendications 1 à 5, **caractérisé en ce que** le corps est formé avec chevauchement et est soudé à la molette avec des galets de soudage et des électrodes en fil.

7. Dispositif de soudage d'un cordon avec mise bout à bout ou un cordon avec chevauchement, comprenant des galets de soudage et des électrodes en fil et au moins une pièce de forme (7, 8, 9) pour introduire au moins un corps préformé, devant être soudé, ainsi que des moyens d'entraînement pour entraîner la pièce de forme dans le sens de la soudure, **caractérisé par** la présence de moyens de serrage (11, 12, 14) pour bloquer le corps dans la direction longitudinale de la pièce de forme, les moyens de serrage comprenant au moins deux butées avant (11, 12) susceptibles de s'introduire par pivotement dans la pièce de forme et de s'écarter de celle-ci par un autre pivotement, et au moins une butée arrière (14), réglable dans la direction longitudinale de la pièce de forme.

8. Dispositif selon la revendication 7, **caractérisé en ce que** la pièce de forme (7) est formée de deux coquilles (8, 9), une première coquille (9) étant disposée de façon à pouvoir pivoter pour ouvrir et fermer cette pièce de forme.

9. Dispositif selon l'une des revendications 8 à 10, **caractérisé en ce que** le moyen d'entraînement est susceptible d'être entraîné à une vitesse d'avance en accord avec la vitesse d'avance de soudage du dispositif.

10. Dispositif selon l'une des revendications 7 ou 8, **caractérisé en ce que** la au moins une pièce de forme (7, 8, 9) est disposée sur une plate-forme (6), placée sur un chariot (4) déplaçable.

11. Dispositif selon la revendication 10, **caractérisé en ce que** plusieurs chariots, ayant chacun au moins une pièce de forme, sont prévus.
